# EUROPÄISCHE PATENTSCHRIFT

(11) **EP 0 761 997 B1**
(45) Veröffentlichungstag und Bekanntmachung des Hinweises auf die Patenterteilung: **01.10.2003**
(21) Anmeldenummer: 96112478.1
(22) Anmeldetag: 02.08.1996
(51) Int. Cl.: F16C 29/04

(54) **Wälzlagereinrichtung, insbesondere für eine Holzbearbeitungsmaschine**
Rolling bearing device, especially for a wood-working machine
Dispositif de roulement, en particulier pour machine de travail du bois

(30) Priorität: 12.08.1995 DE 19529705
(43) Veröffentlichungstag der Anmeldung: 12.03.1997
(73) Patentinhaber: Metabowerke GmbH, 72622 Nürtingen (DE)
(72) Erfinder: Ruf, Hans, 72649 Wolfschlugen (DE)
(74) Vertreter: Dreiss, Fuhlendorf, Steimle & Becker

(56) Entgegenhaltungen:
- DE-A- 1 477 603
- DE-A- 2 519 364
- DE-A- 3 044 612
- DE-A- 3 132 869
- DE-A- 3 504 061
- DE-A- 4 109 286
- DE-U- 9 318 536

## Beschreibung

Die Erfindung betrifft eine Wälzlagereinrichtung, insbesondere für eine Holzbearbeitungsmaschine, mit den Merkmalen des Oberbegriffs des Anspruchs 1.

Wälzlagereinrichtungen mit einem linear verschiebbaren als Laufwagen ausgebildeten Tisch sind bspw. aus der DE-U-93 08 306.8 bekannt. Sie finden bspw. bei Materialbearbeitungsmaschinen Verwendung, bei denen ein linear verschiebbarer Tischabschnitt mit einem darauf abgelegten Werkstück an einem Bearbeitungsbereich der Maschine hin- und herbewegt wird.

Eine weitere Wälzlagereinrichtung ist aus der DE-U-89 06 778.9 bekannt; die harte Gegenlaufbahn für die in Form von Führungsrollen ausgebildeten Wälzkörper ist von gehärteten Stahlstäben gebildet, welche in die Lagergegenfläche der Führungsrollen eingesetzt sind. Die Verwendung eines harten Lagerelements für die Wälzkörper erweist sich insbesondere dann als vorteilhaft, wenn der Tisch oder Tischträger, welcher die Lagergegenflächen für die Wälzkörper bildet aus einem Material besteht, dessen Härte und Verschleißfestigkeit geringer ist als diejenige der Wälzkörper. Unter einem eine harte Gegenlaufbahn bildenden Lagerelement wird daher ein solches verstanden, dessen Härte und Verschleißfestigkeit etwa derjenigen der Wälzkörper entspricht und gegebenenfalls die Härte und Verschleißfestigkeit des insbesondere stranggepreßten Tischprofils oder Tischträgerprofils übersteigt. Die vorstehend beschriebene bekannte Wälzlagereinrichtung ist jedoch aufwendig und teuer, und es besteht die Gefahr, daß sich die gehärteten Stahlstäbe aus der Lagergegenfläche lösen und zum Blockieren oder Klemmen der Lagereinrichtung führen.

Eine gattungsgemäße Wälzlageranordnung ist aus DE-U-93 18 536 bekannt, bei der ein Stahlprofil zur Bildung von harten Gegenlaufflächen für die Lagerrollen in eine Leichtmetallschiene eingepreßt ist.

Bei einer Wälzlagereinrichtung gemäß DE 25 19 364 A ist es bekannt, eine Lauffläche für Wälzkörper ballig gekrümmt auszubilden.

Der vorliegenden Erfindung liegt die Aufgabe zugrunde, eine Wälzlagereinrichtung nach dem Oberbegriff des Anspruchs 1 dahingehend zu verbessern, daß sie auf wirtschaftlichere Weise herstellbar und weniger störungsanfällig ist als bekannte Lagereinrichtungen.

Diese Aufgabe wird bei einer Wälzlagereinrichtung der genannten Art erfindungsgemäß durch die Merkmale des kennzeichnenden Teils des Anspruchs 1 gelöst.

Ein streifen- oder bandförmiges, vorteilhafterweise von einem Stahlband gebildetes Lagerelement läßt sich leicht in eine entsprechende Aufnahme einsetzen und braucht dort nicht ortsfest fixiert zu werden, so daß nicht die Gefahr des Loslösens besteht. Die hierbei auftretenden Montagekosten liegen unter denjenigen bekannter Wälzlagereinrichtungen. Durch die gekrümmte Ausbildung der Oberfläche der Aufnahme und gegebenenfalls zusätzlich, der Lagernadeln oder -rollen können diese auf dem bandförmigen Lagerelement bzw. innerhalb der Aufnahme in Richtung quer zur Verschieberichtung verkippen und so unvermeidbare Fertigungstoleranzen und Verwindungen des Tisches oder Tischträgers ausgleichen. Die erfindungsgemäße Wälzlagereinrichtung ist daher selbsttätig spielausgleichend und zeichnet sich durch eine außerordentliche Laufruhe bei gleichzeitig niederen Herstellungskosten aus.

Nach einer bevorzugten Ausführungsform der Erfindung weist die Aufnahme einen sich in Verschieberichtung erstreckenden rinnen oder U-förmigen Randbereich auf, der das streifen- oder bandförmige Lagerelement gegen ein Loslösen aus seiner bestimmungsgemäßen Position sichert.

Wenn die Ebene des bandförmigen Lagerelements im wesentlichen vertikal verläuft oder leicht gegen die Vertikale geneigt ist, kann es ausreichend sein, nur den unteren Randbereich der Aufnahme rinnenförmig auszubilden; demgegenüber erweist es sich jedoch als besonders vorteilhaft, wenn die Aufnahme von einer T-förmigen Nut gebildet ist, in die das streifenförmige Lagerelement einschiebbar und so an seinen beiden Längsseiten gegen ein Loslösen von der Aufnahme gesichert ist.

Es hat sich als zweckmäßig erwiesen, sowohl die Aufnahme als auch die Wälzkörper ballig gekrümmt auszubilden.

Als besonders vorteilhaft hat es sich erwiesen, als streifenförmiges Lagerelement ein federndes Stahlband zu verwenden; es sind jedoch auch sonstige harte Materialien denkbar.

In Weiterbildung der Erfindung wird die Einsteilbarkeit des Spiels der Wälzlagereinrichtung verbessert. Bei der aus der DE-U-89 06 778.9 bekannten Wälzlagereinrichtung sind die Führungsrollen auf Exzenterzapfen gelagert; die Spieleinstellung erfolgt durch Verdrehen der Exzenterzapfen, was jedoch sehr problematisch ist, da hierdurch auch die Tischebene der Einrichtung verändert wird.

In Weiterbildung der Erfindung weist eine bevorzugte Wälzlagereinrichtung einen eine Lagerschale bildenden Lagerträger auf, der zur Einstellung des Lagerspiels am Tisch oder Tischträger linear verstellbar und festlegbar gehalten ist. Dieser erweist sich insbesondere dann als besonders vorteilhaft, wenn zwei Wälzlagerpaare vorgesehen sind, von denen eines der Lastaufnahme und das andere der Spieleinstellung dient. In diesem Fall ist es ausreichend, wenn das der Lastaufnahme dienende Wälzlagerpaar von dem Tisch bzw. Tischträger gebildet ist und das andere der Spieleinstellung dienende Wälzlagerpaar einen linear verstellbaren Lagerträger umfaßt.

Bei einer besonders bevorzugten Ausführungsform der Erfindung ist der Tisch mittels einer Justiereinrichtung quer zur Verschieberichtung und unabhängig von der Spieleinstellung lageverstellbar. Für eine Höhenverstellbarkeit des Tisches umfaßt die Justiereinrichtung einen Exzenterbolzen, mittels dessen der Tischträger höhenverstellbar an einem Maschinengestell gehalten ist. Zur Erreichung einer insbesondere horizontalen Lageverstellbarkeit umfaßt die Justiereinrichtung ein Langloch, in dem der Tischträger in Richtung des Langlochs verschieblich an dem Maschinengestell gelagert ist. Dabei ist der Tischträger vorteilhafterweise mittels des vorstehend erwähnten Exzenterbolzens in dem Langloch gehalten. Es empfiehlt sich ferner, Mittel, wie Schrauben, zum Arretieren des Tischträgers nach einer Justierung vorzusehen.

Weitere Einzelheiten, Merkmale und Vorteile der Erfindung ergeben sich aus der beigefügten zeichnerischen Darstellung und der nachfolgenden Beschreibung einer vorteilhaften Ausführungsform der Erfindung. In der Zeichnung zeigt:
- Figur 1: einen Ausschnitt einer erfindungsgemäß ausgebildeten Tischkreissäge im Querschnitt; und
- Figur 2: ein Detail der Wälzlagereinrichtung der Tischkreissäge nach Figur 1 in vergrößertem Maßstab.

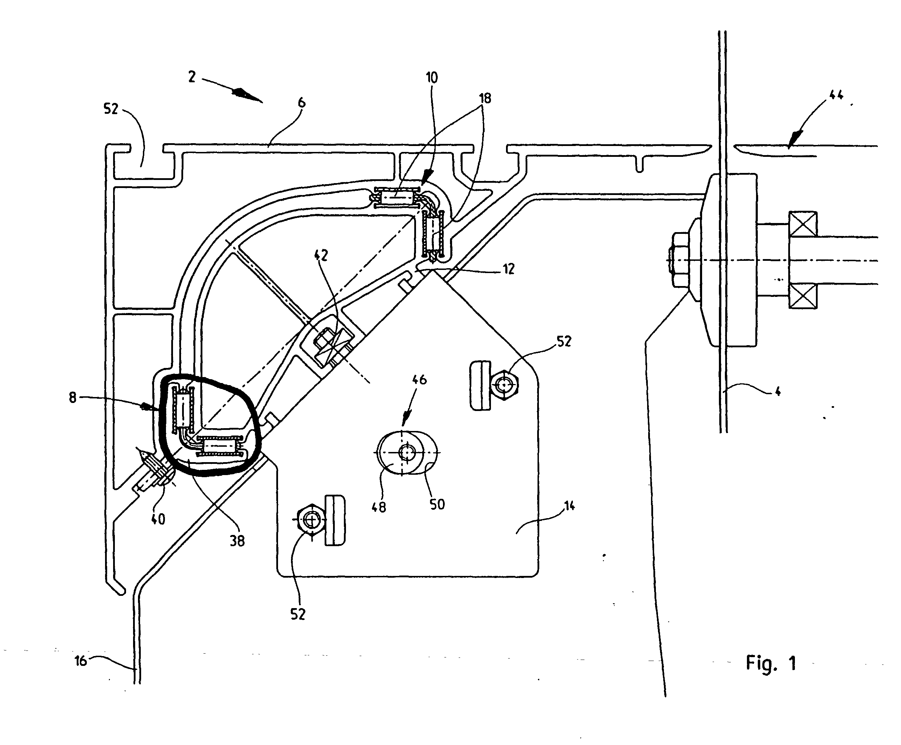

Figur 1 zeigt eine erfindungsgemäß ausgebildete, insgesamt mit dem Bezugszeichen 2 bezeichnete Tischkreissäge mit einem Sägeblatt 4, das sich durch die Tischebene hindurch vertikal nach oben erstreckt. Auf einer Seite des Sägeblatts 4 ist ein linear verschiebbarer Tisch 6 vorgesehen, auf dem ein zu bearbeitendes Werkstück abgelegt und mit dem Tisch 6 in Richtung der Schnittebene des Sägeblatts 4 bewegt werden kann. Der verschiebbare Tisch 6 ist mittels unterer und oberer Lagerpaare 8 bzw. 10 linear verschiebbar an einem Tischträger 12 gelagert, der seinerseits mittels zweier Halteplatten 14 an einem mit dem Bezugszeichen 16 angedeuteten Maschinengestell montiert ist. Beim Betrieb der Tischkreissäge 2 ist somit der Tischträger 12, gegebenenfalls nach einer Justierung, ortsfest, während der Tisch 6 linear hin- und herbewegt wird.

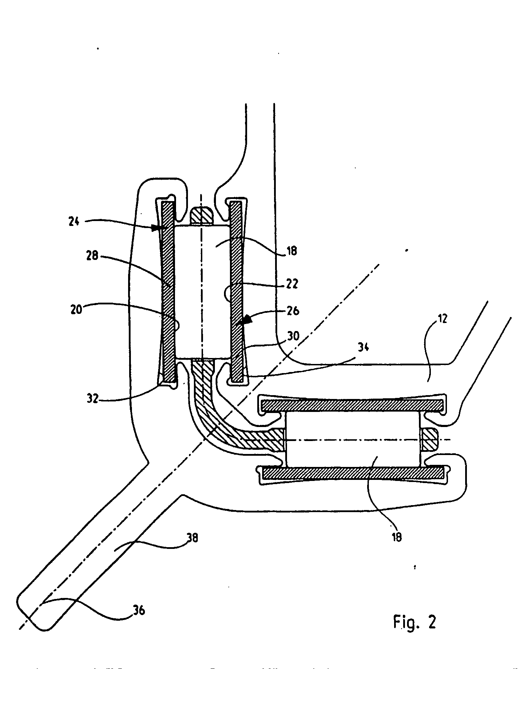

Figur 2 zeigt das untere Lagerpaar 8 in vergrößertem Maßstab. Es umfaßt nadel- oder rollenförmige Wälzkörper 18, deren Gegenlaufbahnen 20 und 22 von einem harten streifenförmigen Lagerelement 24 bzw. 26 in Form eines federnden, nachgiebigen Metallbands 28 bzw. 30 gebildet sind. Das jeweilige Metallband 28, 30 ist in eine Aufnahme 32, 34, die von einer im Querschnitt T-förmigen, in Verschieberichtung verlaufenden Nut gebildet ist, eingeschoben und darin spielbehaftet aufgenommen. Die Aufnahme 34 ist in dem stranggepreßten Tischträger 12 gebildet und stellt eine Lagerhälfte dar. Die Aufnahme 32 ist von einem gegenüber dem Tischträger 12 entlang der unterbrochenen Linie 36 verstellbaren Lagerträger 38 ausgebildet und stellt zusammen mit dem Stahlband 28 die andere Lagerschale dar.

Die Oberflächen der Aufnahmen 32, 34 sind gegenüber den Oberflächen der Stahlbänder 28, 30 bzw. gegenüber der zylindrischen Oberfläche des Wälzkörpers 18 derart ballig gekrümmt ausgeformt, daß ein Abrollen der Wälzkörper 18 auf den Stahlbändern 28, 30 bzw. den Oberflächen der Aufnahmen 32, 34 ermöglicht wird. Hierdurch können unvermeidbare Maß- und Formtoleranzen der zumeist stranggepreßten Leichtmetallprofile ausgeglichen werden.

Während das in der Figur 1 dargestellte obere Wälzlagerpaar 10 von dem verschiebbaren Tisch 6 und dem Tischträger 12 gebildet ist, ist die eine Lagerschale des unteren Wälzlagerpaars 8 von dem Lagerträger 38 gebildet, der an dem verschiebbaren Tisch 6 in Richtung der unterbrochenen Linie 36 symmetrisch zu dem oberen Wälzlagerpaar 10 verschiebbar und mittels Schrauben 40 arretierbar gehalten ist. Nach Aufsetzen des Tischs 6 auf den Tischträger 12 läßt sich also durch Verstellen des Lagerträgers 38 das Spiel der Wälzlagereinrichtung einstellen.

Der Tischträger 12 und die Halteplatten 14 sind mittels Schrauben 42 starr miteinander verbunden. Da die Oberfläche des verschiebbaren Tischs 6 und eines feststehenden Tischbereichs 44 auf der anderen Seite des Sägeblatts 4 in einer Ebene verlaufen müssen, ist eine Justiereinrichtung 46 zur Lageverstellung des Tischträgers 12 und damit des Tisches 6 vorgesehen. Die Justiereinrichtung 46 umfaßt einen am Maschinengestell 16 gelagerten Exzenterbolzen 48, der mit einem Langloch 50 in der Halteplatte 14 zusammenwirkt. Durch Verdrehen des Exzenterbolzens 48 kann die Höhe des Tischträgers 12 bzw. des Tischs 6 eingestellt werden. In einer Nut 52 des Tischs 6 kann bspw. ein nicht dargestellter Parallelanschlag geführt werden; solchenfalls muß die Nut 52 parallel zur Ebene des Sägeblatts 4 ausgerichtet werden. Dies geschieht bei der dargestellten Tischkreissäge durch Querverschieben der Halteplatten 14 auf den beiderseitigen Exzenterbolzen 48 entlang des von der Erstreckung des Langlochs 50 gegebenen Wegs. Nach Durchführung der Justierung werden die Halteplatten 14 mittels Schrauben 52 an dem Maschinengestell 16 festgelegt.

## Patentansprüche

1. Wälzlagereinrichtung, insbesondere für eine Holzbearbeitungsmaschine, mit einem Tischträger (12) und einem bzgl. des Tischträgers (12) linear verschiebbaren Tisch (6) und mit einem sich in Verschieberichtung erstreckenden, eine harte Gegenlaufbahn für die Wälzkörper (18) bildenden Lagerelement (24, 26), wobei die sich auf dem Lagerelement (24, 26) abstützenden Wälzkörper (18) nadel- oder rollenförmig sind und das Lagerelement (24, 26) streifen- oder bandförmig ausgebildet und in eine sich in Verschieberichtung erstreckende Aufnahme (32, 34) am Tisch (6) und/oder am Tischträger (12) eingesetzt ist, **dadurch gekennzeichnet, dass** das Lagerelement (24, 26) spielbehaftet und kippbar in der Aufnahme (32, 34) aufgenommen ist und sich auf eine ballige Oberfläche der Aufnahme (32, 34) abstützt.

2. Wälzlagereinrichtung nach Anspruch 1, **dadurch gekennzeichnet, dass** die Wälzkörper (18) mit ballig gekrümmter Oberfläche ausgebildet sind.

3. Wälzlagereinrichtung nach Anspruch 1 oder 2, **dadurch gekennzeichnet, dass** die Aufnahme (32, 34) einen sich in Verschieberichtung erstreckenden rinnenförmigen Randbereich aufweist, der das streifen- oder bandförmige Lagerelement (24, 26) sichert.

4. Wälzlagereinrichtung nach Anspruch 3, **dadurch gekennzeichnet, dass** die Aufnahme (32, 34) von einer T-förmigen Nut gebildet ist, in die das streifenförmige Lagerelement (24, 26) einschiebbar ist.

5. Wälzlagereinrichtung nach einem oder mehreren der vorstehenden Ansprüche, **dadurch gekennzeichnet, dass** das Lagerelement (24, 26) ein Stahlband (28, 30) ist.

6. Wälzlagereinrichtung nach einem oder mehreren der vorstehenden Ansprüche, **dadurch gekennzeichnet, dass** der Tisch (6) und/oder der Tischträger (12) ein Strangpreßprofil ist.

7. Wälzlagereinrichtung nach einem oder mehreren der vorstehenden Ansprüche, **gekennzeichnet durch** einen eine Lagerschale bildenden Lagerträger (38), der zur Einstellung des Lagerspiels am Tisch (6) oder Tischträger (12) verstellbar und festlegbar gehalten ist.

8. Wälzlagereinrichtung nach Anspruch 7, **gekennzeichnet durch** zwei Wälzlagerpaare (8, 10), von denen eines (10) zur Lastaufnahme und das andere (8) zur Spieleinstellung dient.

9. Wälzlagereinrichtung nach einem oder mehreren der vorstehenden Ansprüche, **dadurch gekennzeichnet, dass** der Tisch (6) mittels einer Justiereinrichtung (46) quer zur Verschieberichtung und unabhängig von der Spieleinstellung lageverstellbar ist.

10. Wälzlagereinrichtung nach Anspruch 9, **dadurch gekennzeichnet, dass** die Justiereinrichtung (46) einen Exzenterbolzen (48) umfaßt, mittels dessen der Tischträger (12) höhenverstellbar an einem Maschinengestell (16) gehalten ist.

11. Wälzlagereinrichtung nach Anspruch 9 oder 10, **dadurch gekennzeichnet, dass** die Justiereinrichtung (46) ein sich senkrecht zur Verschieberichtung erstreckendes Langloch (50) umfaßt, in dem der Tischträger (12) in Richtung des Langlochs (50) verschieblich an dem Maschinengestell (16) gelagert ist.

12. Wälzlagereinrichtung nach einem der Ansprüche 9 bis 11, **dadurch gekennzeichnet, dass** der Tischträger (12) nach der Justierung am Maschinengestell (16) festlegbar ist.

## Claims

1. Rolling bearing device, in particular for a woodworking machine, comprising a table carrier (12) and a table (6) which is linearly displaceable with respect to the table carrier (12) and comprising a bearing element (24, 26) extending in the direction of displacement and forming a hard track for the rolling bodies (18), wherein the rolling bodies (18) supported on the bearing element (24, 26) are needle-shaped or roller-shaped and the bearing element (24, 26) is formed in a strip-shape or band-shape and is inserted into a receiver (32, 34) on the table (6) and/or on the table carrier (12) extending in the direction of displacement, **characterised in that** that the bearing element (24, 26) is received with play and so as to be tiltable in the receiver (32, 34) and is supported on a convex surface of the receiver (32, 34).

2. Rolling bearing device according to claim 1, **characterised in that** the rolling bodies (18) are formed with a convexly curved surface.

3. Rolling bearing device according to claim 1 or 2, **characterised in that** the receiver (32, 34) has a groove-shaped edge region extending in the direction of displacement, securing the strip-shaped or band-shaped bearing element (24, 26).

4. Rolling bearing device according to claim 3, **characterised in that** the receiver (32, 34) is formed by a T-shaped groove, into which the strip-shaped bearing element (24, 26) can be inserted.

5. Rolling bearing device according to one or more of the preceding claims, **characterised in that** the bearing element (24, 26) is a steel band (28, 30).

6. Rolling bearing device according to one or more of the preceding claims, **characterised in that** the table (6) and/or. the table carrier (12) is an extruded section.

7. Rolling bearing device according to one or more of the preceding claims, **characterised by** a bearing carrier (38) forming a bearing shell, the bearing carrier being held adjustably and fixably to adjust the bearing play on the table (6) or table carrier (12).

8. Rolling bearing device according to claim 7, **characterised by** two pairs of rolling bearings (8, 10), of which one (10) is used for receiving a load and the other (8) for adjusting play.

9. Rolling bearing device according to one or more of the preceding claims, **characterised in that** the position of the table (6) can be adjusted by means of an adjusting device (46) transversely to the displacement direction and independently of the play adjustment.

10. Rolling bearing device according to claim 9, **characterised in that** the adjusting device (46) comprises an eccentric bolt (48), by means of which the table carrier (12) is held height-adjustably on a machine frame (16).

11. Rolling bearing device according to claim 9 or 10, **characterised in that** the adjusting device (46) comprises a slot (50) extending perpendicularly to the displacement direction, in which the table carrier (12) is mounted on the machine frame (16) so as to be displaceable in the direction of the slot (50).

12. Rolling bearing device according to any one of claims 9 to 11, **characterised in that** the table carrier (12) can be fixed after adjustment on the machine frame (16).

## Revendications

1. Dispositif de roulement, en particulier pour machine de travail du bois, avec un support de table (12) et une table (6) mobile en translation linéaire par rapport audit support de table (12) et avec un élément de palier (24, 26) qui s'étend dans la direction de translation et forme une surface de roulement dure pour les éléments de roulement (18), lesdits éléments de roulement (18), qui prennent appui sur l'élément de palier (24, 26), affectant la formé d'aiguilles ou de rouleaux et l'élément de palier (24, 26) affectant la forme d'un ruban ou d'une bande et étant inséré dans un logement (32, 34) orienté dans la direction de translation et situé au niveau de la table (6) et/ou du support de table (12), **caractérisé en ce que** l'élément de palier (24, 26) est logé avec du jeu et avec capacité de basculement dans le logement (32, 34) et prend appui sur une surface bombée du logement (32, 34).

2. Dispositif de roulement selon la revendication 1, **caractérisé en ce que** les éléments de roulement (18) sont formés avec une surface bombée.

3. Dispositif de roulement selon la revendication 1 ou 2, **caractérisé en ce que** le logement (32, 34) présente une zone marginale en forme de rigole orientée dans la direction de translation, qui bloque l'élément de palier (24, 26) en forme de ruban ou de bande.

4. Dispositif de roulement selon la revendication 3, **caractérisé en ce que** le logement (32, 34) est formé par une rainure en T dans laquelle peut être inséré l'élément de palier (24, 26) en forme de bande.

5. Dispositif de roulement selon une ou plusieurs des revendications précédentes, **caractérisé en ce que** l'élément de palier (24, 26) est un ruban d'acier (28, 30).

6. Dispositif de roulement selon une ou plusieurs des revendications précédentes, **caractérisé en ce que** la table (6) et/ou le support de table (12) est/sont un/des profilé(s) extrudé(s).

7. Dispositif de roulement selon une ou plusieurs des revendications précédentes, **caractérisé par** un support de palier (38) formant logement de palier, qui est maintenu avec capacité de déplacement et de fixation sur la table (6) ou le support de table (12) pour le réglage du jeu du palier.

8. Dispositif de roulement selon la revendication 7, **caractérisé par** deux paires de paliers de roulement (8, 10), dont un (10) sert à absorber la charge et l'autre (8) sert à régler le jeu.

9. Dispositif de roulement selon une ou plusieurs des revendications précédentes, **caractérisé en ce que** la table (6) peut être réglée en position transversalement à la direction de translation et indépendamment du réglage du jeu au moyen d'un dispositif de réglage (46).

10. Dispositif de roulement selon la revendication 9, **caractérisé en ce que** le dispositif de réglage (46) comprend un goujon excentré (48) au moyen duquel le support de table (12) est maintenu sur un bâti de machine (16) avec capacité de réglage en hauteur.

11. Dispositif de roulement selon la revendication 9 ou 10, **caractérisé en ce que** le dispositif de réglage (46) comprend un trou oblong (50) perpendiculaire à la direction de translation, dans lequel le support de table (12) est monté mobile en translation dans la direction du trou oblong (50) sur le bâti de machine (16).

12. Dispositif de roulement selon l'une des revendications 9 à 11, **caractérisé en ce que** le support de table (12) peut être fixé au bâti de machine (16) après réglage.
